# EUROPEAN PATENT APPLICATION

(11) **EP 4 636 454 A1**
(43) Date of publication of application: **22.10.2025**
(21) Application number: 22968773.6
(22) Date of filing: 19.12.2022
(51) Int. Cl.: G02B 21/24, G02B 7/28

(54) **FOCUSING CONTROL METHOD, APPARATUS AND SYSTEM, AND STORAGE MEDIUM**

(71) Applicant: Boe Technology Group Co., Ltd., Beijing 100015 (CN)
(72) Inventor: ZHOU, Lijia, Beijing 100176 (CN); ZHANG, Qing, Beijing 100176 (CN); HE, Huaqiang, Beijing 100176 (CN); WANG, Li, Beijing 100176 (CN); CHENG, Jiuyang, Beijing 100176 (CN); ZHOU, Quanguo, Beijing 100176 (CN); TANG, Hao, Beijing 100176 (CN); WANG, Zhidong, Beijing 100176 (CN); XU, Lirong, Beijing 100176 (CN); LAN, Ronghua, Beijing 100176 (CN); SUN, Xiuru, Beijing 100176 (CN); ZHANG, Junrui, Beijing 100176 (CN); ZHU, Xuehui, Beijing 100176 (CN); LI, Xing, Beijing 100176 (CN); TIAN, Zhili, Beijing 100176 (CN); SHU, Jiang, Beijing 100176 (CN); LIU, Yize, Beijing 100176 (CN); JIANG, Guo, Beijing 100176 (CN)
(74) Representative: Santarelli
(86) International application number: PCT/CN2022/139879
(87) International publication number: WO 2024/130469

(57) **Abstract**

The present disclosure discloses a focusing control method, apparatus and system, and a storage medium, which relates to the field of control. The focusing control method includes: controlling a carrier platform carrying a display panel to move in a preset direction at a preset speed; controlling a distance measuring sensor to measure a first distance between the distance measuring sensor and a detection point, wherein the detection point is a point on a surface of the display panel located at a preset distance measuring position; adjusting a distance between an image acquiring device and the detection point based on the first distance in a case where the detection point reaches a preset image acquiring position in a field of view of the image acquiring device, such that the distance between the image acquiring device and the detection point is a focusing distance of the image acquiring device; and controlling the image acquiring device to acquire an image of the surface of the display panel.

## Description

### TECHNICAL FIELD

The present disclosure relates to the field of control, in particular to a focusing control method, a focusing control apparatus, a focusing control system, and storage medium.

### BACKGROUND

During the manufacturing process of display panels, protrusions or depressions may appear on a panel surface, which may affect the display quality of the display panel.

Currently, an automatic optical detection device is commonly used to detect the surface quality of the display panel. An automatic optical detection device comprises a distance measuring sensor and an image acquiring device in an integrated coaxial arrangement. The distance measuring sensor is used to detect a distance between the image acquiring device and the display panel, and then the position of the image acquiring device is adjusted according to the distance, so that the image acquiring device can collect a clear surface image of the display panel. Then, the acquired image is analyzed to obtain a detection result of the surface of the display panel.

### SUMMARY

According to a first aspect of the embodiments of the present disclosure, there is provided a focusing control method, comprising: controlling a carrier platform carrying a display panel to move in a preset direction at a preset speed; controlling a distance measuring sensor to measure a first distance between the distance measuring sensor and a detection point, wherein the detection point is a point on a surface of the display panel located at a preset distance measuring position; adjusting a distance between an image acquiring device and the detection point based on the first distance in a case where the detection point reaches a preset image acquiring position in a field of view of the image acquiring device, such that the distance between the image acquiring device and the detection point is a focusing distance of the image acquiring device; and controlling the image acquiring device to acquire an image of the surface of the display panel.

In some embodiments, the adjusting a distance between an image acquiring device and the detection point based on the first distance comprises: controlling the image acquiring device to perform image acquisition at a preset frequency in a case where the detection point is located at the preset distance measuring position; controlling the image acquiring device to stop performing image acquisition and count a total number of acquired images in a case where the detection point reaches the preset image acquiring position; and adjusting the distance between the image acquiring device and the detection point based on the first distance in a case where the total number of the acquired images is different from a preset threshold.

In some embodiments, the adjusting the distance between the image acquiring device and the detection point based on the first distance in a case where the total number of the acquired images is different from a preset threshold comprises: reducing the distance between the image acquiring device and the detection point based on the first distance in a case where the total number of the acquired images is greater than the preset threshold.

In some embodiments, the adjusting the distance between the image acquiring device and the detection point based on the first distance in a case where the total number of the acquired images is different from a preset threshold comprises: increasing the distance between the image acquiring device and the detection point based on the first distance in a case where the total number of the acquired images is less than the preset threshold.

In some embodiments, the adjusting a distance between an image acquiring device and the detection point based on the first distance comprises: adjusting the distance between the image acquisition device and the detection point to the focusing distance in a case where the total number of the acquired images is equal to the preset threshold.

In some embodiments, the adjusting a distance between an image acquiring device and the detection point based on the first distance comprises: controlling the carrier platform to stop moving in a case where the detection point reaches the preset image acquiring position; adjusting the distance between the image acquiring device and the detection point multiple times based on the first distance, to control the image acquiring device to acquire images of the surface of the display panel at multiple different positions; selecting an image with a highest definition from the images; and adjusting the distance between the image acquiring device and the detection point, such that the image acquiring device is located at a location where the image with the highest definition is acquired.

In some embodiments, the adjusting a distance between an image acquiring device and the detection point based on the first distance comprises: controlling the image acquiring device to perform image acquisition at a preset frequency in a case where the detection point is located at the preset distance measuring position; and controlling the image acquiring device to stop performing image acquisition and count a total number of acquired images in a case where the detection point reaches the preset image acquiring position, wherein an adjusted distance between the image acquiring device and the detection point is less than the first distance in a case where the total number of the acquired images is greater than the preset threshold.

In some embodiments, the adjusted distance between the image acquiring device and the detection point is greater than the first distance in a case where the total number of the acquired images is less than the preset threshold.

In some embodiments, the selecting an image with a highest definition from the images comprises: calculating a sharpness of each image of the images; and taking an image with a highest sharpness level as the image with the highest definition.

In some embodiments, controlling the distance measuring sensor to measure a second distance between the distance measuring sensor and a preset detection point; determining a distance measuring deviation of the distance measuring sensor based on the second distance and a preset distance; determining a working current value based on the distance measuring deviation; and adjusting a working current of the distance measuring sensor based on the working current value.

In some embodiments, the working current value is positively correlated with the distance measuring deviation.

According to a second aspect of the embodiments of the present disclosure, there is provided a focusing control apparatus, comprising: a processor; and a memory coupled to the processor, storing program instructions which, when executed by the processor, cause the processor to perform the method according to any one of the above embodiments.

According to a third aspect of the embodiments of the present disclosure, there is provided a focusing control system, comprising: a focusing control apparatus according to any one of the above embodiments, a carrier platform configured to move in a preset direction at a preset speed, wherein the carrier platform is used to carry a display panel; a distance measuring sensor configured to measure a distance between the distance measuring sensor and a detection point; and an image acquiring device configured to acquire an image of the surface of the display panel, wherein there is a preset distance between the distance measuring sensor and the image acquiring device in a preset direction.

According to a fourth aspect of the embodiments of the present disclosure, a non-transitory computer-readable storage medium is provided on which computer instructions are stored, which when executed by a processor implement the method according to any one of the above embodiments.

Other features and advantages of the present invention will become apparent from the following detailed description of exemplary embodiments of the present disclosure with reference to the accompanying drawings.

### BRIEF DESCRIPTION OF THE DRAWINGS

The accompanying drawings, which are incorporated in and constitute a portion of this specification, illustrate embodiments of the present disclosure and, together with the description, serve to explain the principles of the present disclosure.

The present disclosure will be more clearly understood from the following detailed description with reference to the accompanying drawings, in which:
FIG. 1 is a flowchart of a focusing control method according to one embodiment of the present disclosure;
FIG. 2 is a flowchart of the focusing control method according to another embodiment of the present disclosure;
FIGS. 3 to 5 are schematic structure diagrams of a focusing control system according to some embodiments of the present disclosure;
FIG. 6 is a flowchart of the focusing control method according to still another embodiment of the present disclosure;
FIG. 7 is a flowchart of the focusing control method according to a still another embodiment of the present disclosure;
FIG. 8 is a flowchart of a calibration method for a distance measuring sensor according to one embodiment of the present disclosure;
FIG. 9 is a schematic structure diagram of a focusing control apparatus according to one embodiment of the present disclosure;
FIG. 10 is a schematic structure diagram of a focusing control system according to one embodiment of the present disclosure.

It should be understood that the dimensions of the various parts shown in the drawings are not drawn to the actual scale. In addition, the same or similar reference signs are used to denote the same or similar components.

### DETAILED DESCRIPTION

Various exemplary embodiments of the present disclosure will now be described in detail with reference to the accompanying drawings. The following description of the exemplary embodiments is in fact merely illustrative and is in no way intended as a limitation to the present disclosure, its application or use. The present disclosure may be implemented in many different forms, not limited to the embodiments described herein. These embodiments are provided so that this disclosure will be thorough and complete, and will fully convey the scope of the disclosure to those skilled in the art. Notice that, unless specifically stated otherwise, relative arrangement of components and steps, material composition, numerical expressions, and numerical values set forth in these embodiments are to be construed as merely illustrative, and not as a limitation.

The use of the terms "first", "second" or the like in the present disclosure does not denote any order, quantity or importance, but are merely used to distinguish between different components. A word such as "includes" or "comprises" means that the element before the word covers the elements listed after the word, without excluding the possibility of also covering other elements.

Unless otherwise defined, all terms (including technical and scientific terms) used herein have the same meaning as commonly understood by one of ordinary skill in the art to which exemplary embodiments in accordance with principles of inventive concepts belong. It will also be understood that terms defined in such general-purpose dictionaries should be interpreted as having a meaning that is consistent with their meaning in the context of the relevant art, and not to be interpreted in an idealized or overly formal sense, unless explicitly defined herein.

Techniques, methods, and apparatus known to those of ordinary skill in the relevant art may not be discussed in detail, but where appropriate, these techniques, methods, and apparatuses should be considered as part of the specification.

The inventors found through research that in existing technology, due to the integrated coaxial arrangement of the image acquiring device and the distance measuring sensor, it is impossible to replace image acquiing device with different DoF (Depth of Field) parameters according to different service scenarios, thereby increasing the cost of detecting the surface quality of display panels.

Based on this, the present disclosure provides a focusing control scheme. Due to the separate arrangement of a distance measuring sensor and an image acquiring device, image acquiring devices with different DoF parameters can be replaced according to different service scenarios, thereby effectively reducing the cost of detecting the surface quality of display panels.

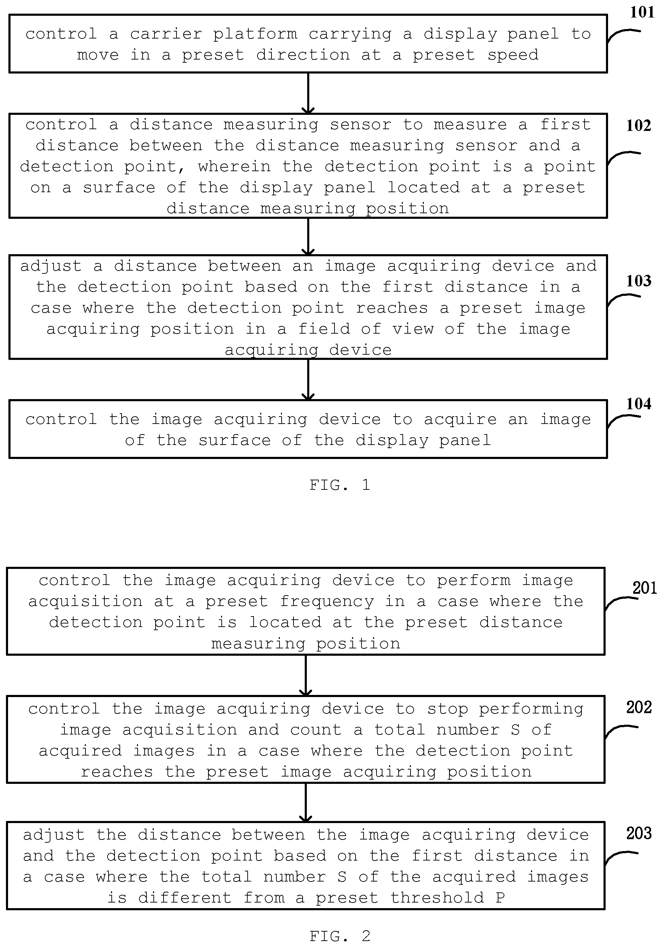

FIG. 1 is a flowchart of a focusing control method according to one embodiment of the present disclosure. In some embodiments, the following focusing control method is executed by a focusing control apparatus.

In step 101, a carrier platform carrying a display panel is controlled to move in a preset direction at a preset speed.

In step 102, a distance measuring sensor is controlled to measure a first distance between the distance measuring sensor and a detection point, wherein the detection point is a point on a surface of the display panel located at a preset distance measuring position.

It should be noted that the detection point may be a preselected point on the surface of the display panel or a randomly selected point on the surface of the display panel.

In some embodiments, the distance measuring sensor is located at a fixed position above the display panel, and the preset distance measuring position is directly below the distance measuring sensor.

For example, the distance measuring sensor is a laser distance measuring sensor or a wireless distance measuring sensor.

In step 103, a distance between an image acquiring device and the detection point is adjusted based on the first distance in a case where the detection point reaches a preset image acquiring position in a field of view of the image acquiring device, such that the distance between the image acquiring device and the detection point is a focusing distance of the image acquiring device.

In some embodiments, the step of adjusting the distance between the image acquiring device and the detection point based on the first distance is shown in FIG. 2.

In step 201, the image acquiring device is controlled to perform image acquisition at a preset frequency in a case where the detection point is located at the preset distance measuring position.

In step 202, the image acquiring device is controlled to stop performing image acquisition and count a total number S of acquired images in a case where the detection point reaches the preset image acquiring position.

In some embodiments, the image acquiring device is located above the display panel, and the preset image acquiring position is directly below the image acquiring device. For example, the preset image acquiring position is located at the center of the field of view of the image acquiring device.

In step 203, the distance between the image acquiring device and the detection point is adjusted based on the first distance in a case where the total number S of the acquired images is different from a preset threshold P.

It should be noted that in the case where the carrier platform moves along the preset direction at a preset speed, the image acquiring device has a preset image acquiring frequency, and there is a preset distance between the distance measuring sensor and the image acquiring device, the total number of images acquired by the image acquiring device (i.e. the preset threshold P) is a fixed value if the detection point on the horizontal surface of the display panel moves from the preset distance measuring position to the preset image acquiring position, .

If the total number S of images acquired by the image acquiring device is greater than the preset threshold P, it indicates that the field of view captured by the image acquiring device has increased, i.e., the presence of a depression on the surface of the display panel. If the total number S of images acquired by the image acquiring device is less than the preset threshold P, it indicates that the field of view captured by the image acquiring device has decreased, i.e., the presence of a protrusion on the surface of the display panel.

In some embodiments, if the total number S of acquired images is greater than the preset threshold P, the distance between the image acquiring device and the detection point is reduced based on the first distance, such that the distance between the image acquiring device and the detection point is the focusing distance of the image acquiring device.

In some embodiments, if the total number S of acquired images is less than the preset threshold P, the distance between the image acquiring device and the detection point is increased based on the first distance, such that the distance between the image acquiring device and the detection point is the focusing distance of the image acquiring device.

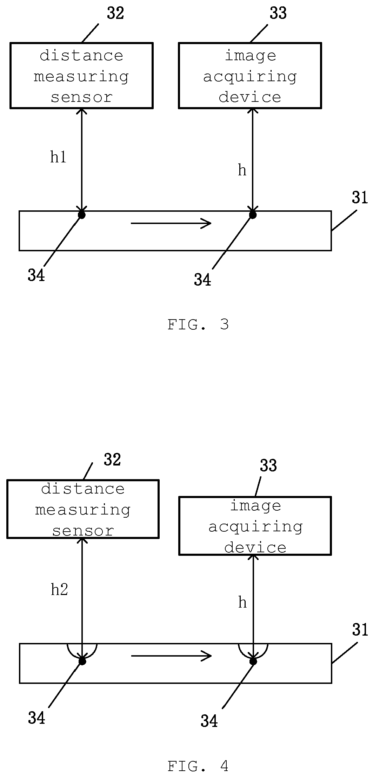

In some embodiments, as shown in FIG. 3, a distance measuring sensor 32 and an image acquiring device 33 are arranged above a display panel 31. There is a preset distance between the distance measuring sensor 32 and the image acquiring device 33. The position of distance measuring sensor 32 is fixed. For example, in a case where the surface of the display panel 31 is a horizontal surface, the distance between the distance measuring sensor 32 and the horizontal surface of the display panel 31 is h1. In some embodiments, the distance h1 between the distance measuring sensor 32 and the horizontal surface of the display panel 31 may be equal to a focusing distance h.

In a case where the detection point 34 is located at the preset distance measuring position, the image acquiring device 33 is controlled to perform image acquisition at a preset frequency. At this point, the distance between the distance measuring sensor 32 and the detection point 34 is h1. As the display panel 31 moves to the right, the detection point 34 reaches a preset image acquiring position. At this point, the image acquiring device 33 is controlled to stop performing image acquisition, and the counted total number S of the acquired images is equal to a preset threshold P, indicating that the area where the detection point 34 is located has a planar surface. In this case, the distance between the image acquiring device 33 and the detection point 34, i.e., the distance between the image acquiring device 33 and the horizontal surface of the display panel 31, is set to the focusing distance h. Therefore, the image acquiring device 33 can capture a clear surface image of the display panel 31.

In some embodiments, as shown in FIG. 4, there is a depression area on the surface of the display panel 31, and the detection point 34 is located in this depression area. In a case where the detection point 34 is located at the preset distance measuring position, the image acquiring device 33 is controlled to perform image acquisition at a preset frequency. At this point, the distance between the distance measuring sensor 32 and the detection point 34 is h2, and h2 > h1. As the display panel 31 moves to the right, the detection point 34 reaches the preset image acquiring position. At this point, the image acquiring device 33 is controlled to stop performing image acquisition, and the counted total number S of the acquired images is greater than the preset threshold P, indicating that the area where the detection point 34 is located has a surface depression. At this point, the distance between the image acquiring device 33 and the detection point 34 is greater than the focusing distance h. In this case, the distance between the image acquiring device 33 and the detection point 34 can be reduced by a difference h2-h1, in order to set the distance between the image acquiring device 33 and the detection point 34 to the focusing distance h. Therefore, the image acquiring device 33 can acquire a clear surface image of the display panel 31.

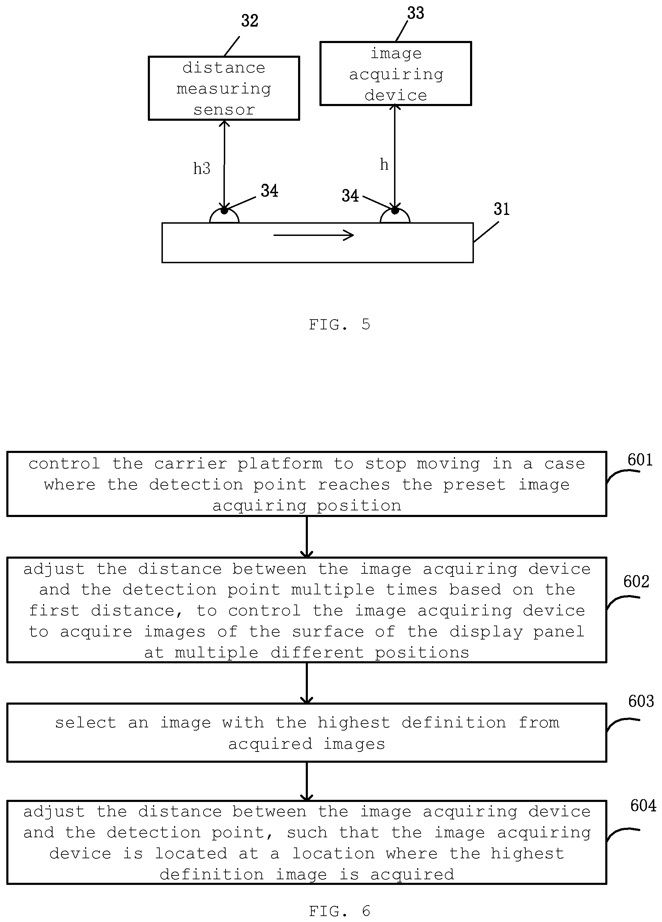

In some embodiments, as shown in FIG. 5, there is a protrusion area on the surface of the display panel 31, and the detection point 34 is located in this protrusion area. When the detection point 34 is located at the preset distance measuring position, the image acquiring device 33 is controlled to perform image acquisition at a preset frequency. At this point, the distance between the distance measuring sensor 32 and the detection point 34 is h3, and h3 < h1. As the display panel 31 moves to the right, the detection point 34 reaches the preset image acquiring position. At this point, the image acquiring device 33 is controlled to stop performing image acquisition, and the counted total number S of the acquired images is less than the preset threshold P, indicating that the area where the detection point 34 is located has a surface protrusion. At this point, the distance between the image acquisition device 33 and the detection point 34 is less than the focusing distance h. In this case, the distance between the image acquiring device 33 and the detection point 34 can be increased by a difference h1-h3, in order to set the distance between the image acquiring device 33 and the detection point 34 to the focusing distance h. Therefore, the image acquiring device 33 can acquire a clear surface image of the display panel 31.

In some embodiments, the step of adjusting the distance between the image acquiring device and the detection point based on the first distance is shown in FIG. 6.

In step 601, the carrier platform is controlled to stop moving in a case where the detection point reaches the preset image acquiring position.

In step 602, the distance between the image acquiring device and the detection point is adjusted multiple times based on the first distance, to control the image acquiring device to acquire images of the surface of the display panel at multiple different positions.

For example, as shown in FIG. 4, if the first distance h2 is greater than the preset distance h1, it indicates a surface depression in the area where the detection point 34 is located. At this point, the distance between the image acquiring device 33 and the detection point 34 is greater than the focusing distance h. In this case, the distance between the image acquiring device and the detection point can be reduced multiple times to control the image acquiring device to perform image acquisition on the surface of the display panel at multiple different positions.

For example, as shown in FIG. 5, if the first distance h3 is less than the preset distance h1, it indicates a surface protrusion in the area where the detection point 34 is located. At this point, the distance between the image acquiring device 33 and the detection point 34 is less than the focusing distance h. In this case, the distance between the image acquiring device and the detection point can be increased multiple times to control the image acquiring device to perform image acquisition on the surface of the display panel at multiple different positions.

In step 603, an image with the highest definition is selected from acquired images.

In some embodiments, the sharpness of each image of the images is calculated, and an image with the highest sharpness is used as the image with the highest definition.

For example, edge detection is performed by using the Sobel operator to calculate the sharpness of each image.

In step 604, the distance between the image acquiring device and the detection point is adjusted, such that the image acquiring device is located at a location where the highest definition image is acquired.

This ensures that the image acquiring device can capture a clear surface image of the display panel.

In some embodiments, after the image acquiring device is located at the position where the highest definition image is acquired, the carrier platform is controlled to continue moving in the preset direction at a preset speed.

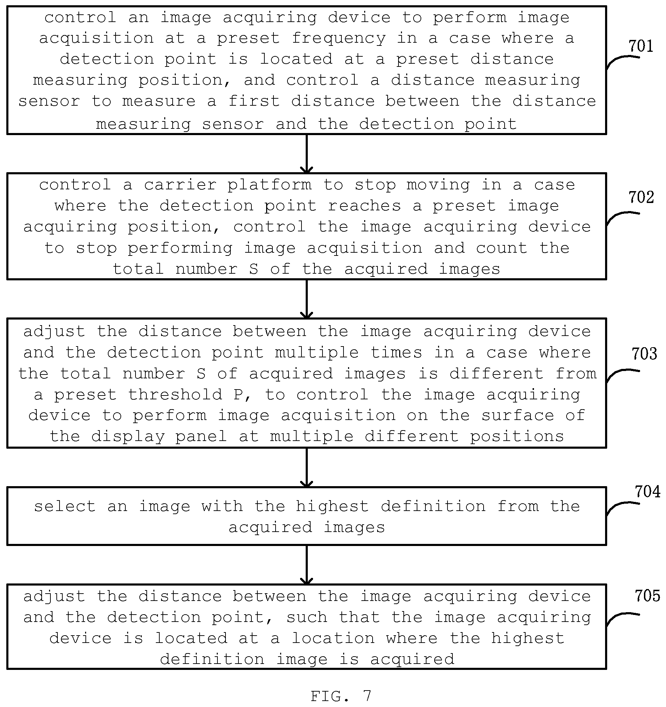

FIG. 7 is a flowchart of the focusing control method according to still another embodiment of the present disclosure. In some embodiments, the following focusing control method is executed by a focusing control apparatus.

In step 701, in a case where a detection point is located at a preset distance measuring position, an image acquiring device is controlled to perform image acquisition at a preset frequency, and a distance measuring sensor is controlled to measure a first distance between the distance measuring sensor and the detection point. The detection point is a point on a surface of a display panel located at a preset distance measuring position.

In step 702, in a case where the detection point reaches a preset image acquiring position, a carrier platform is controlled to stop moving, and the image acquiring device is controlled to stop performing image acquisition and count the total number S of the acquired images.

In step 703, if the total number S of acquired images is different from a preset threshold P, the distance between the image acquiring device and the detection point is adjusted multiple times to control the image acquiring device to perform image acquisition on the surface of the display panel at multiple different positions.

In some embodiments, if the total number S of the acquired images is greater than the preset threshold P, the distance between the image acquiring device and the detection point is reduced multiple times to control the image acquiring device to perform image acquisition on the surface of the display panel at multiple different positions. As shown in FIG. 4, if the fixed distance between the distance measuring sensor and the surface of the display panel is the focusing distance, the first distance measured in step 701 above is greater than the focusing distance. In this case, the distance between the image acquiring device and the detection point after the adjustment is less than the first distance.

In some embodiments, if the total number S of the acquired images is less than the preset threshold P, the distance between the image acquiring device and the detection point is increased multiple times to control the image acquiring device to perform image acquisition on the surface of the display panel at multiple different positions. As shown in FIG. 5, if the fixed distance between the distance measuring sensor and the surface of the display panel is the focusing distance, the first distance measured in step 701 above is less than the focusing distance. In this case, the distance between the image acquiring device and the detection point after the adjustment is greater than the first distance.

In step 704, an image with the highest definition is selected from the acquired images.

In some embodiments, the sharpness of each image of the images is calculated, and an image with the highest sharpness is used as the image with the highest definition.

For example, edge detection is performed using the Sobel operator to calculate the sharpness of the each image.

In step 705, the distance between the image acquiring device and the detection point is adjusted, such that the image acquiring device is located at a location where the highest definition image is acquired.

This ensures that the image acquiring device can capture a clear surface image of the display panel.

In some embodiments, after the image acquiring device is located at the position where the highest definition image is acquired, the carrier platform is controlled to continue moving in the preset direction at a preset speed.

Returning to FIG. 1, in step 104, the image acquiring device is controlled to acquire an image of the surface of the display panel.

In the focusing control method provided in the above embodiment of this disclosure, a first distance between the distance measuring sensor and the detection point is measured using the distance measuring sensor. Then, in a case where the detection point reaches a preset image acquiring position in the field of view of the image acquiring device, a distance between the image acquiring device and the detection point is adjusted based on the first distance, such that the distance between the image acquiring device and the detection point is a focusing distance of the image acquiring device, therefore the image acquiring device can capture a clear surface image of the display panel. Due to the separate arrangement of the distance measuring sensor and the image acquiring device, image acquiring devices with different DoF parameters can be replaced according to different business scenarios, thereby effectively reducing the cost of detecting the surface quality of display panels.

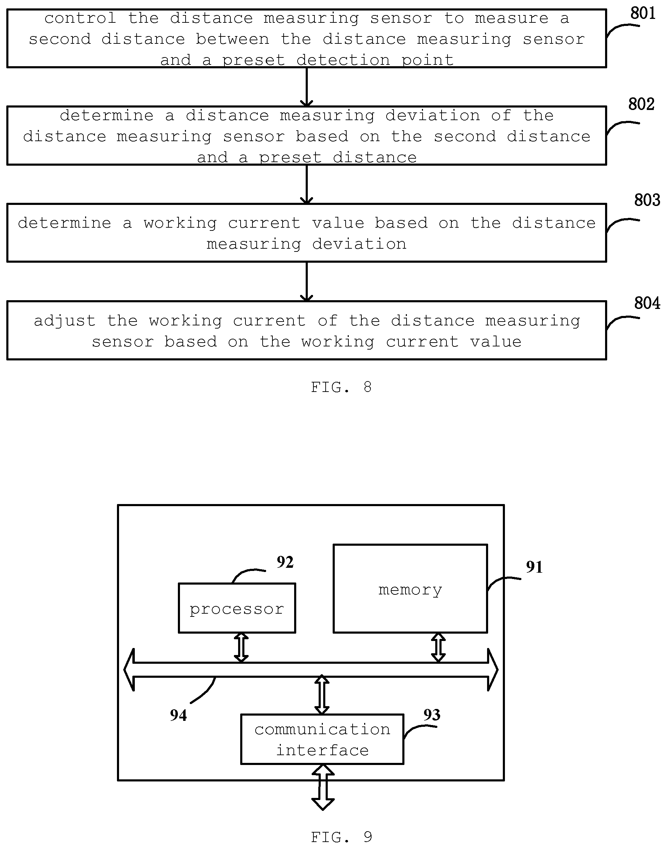

FIG. 8 is a flowchart of a calibration method for a distance measuring sensor according to one embodiment of the present disclosure. In some embodiments, the following calibration method for a distance measuring sensor is executed by a focusing control apparatus.

In step 801, the distance measuring sensor is controlled to measure a second distance between the distance measuring sensor and a preset detection point.

For example, the preset detection point may be a point in the planar surface area of the display panel or a point on the carrier platform.

In step 802, a distance measuring deviation of the distance measuring sensor is determined based on the second distance and a preset distance.

In step 803, a working current value is determined based on the distance measuring deviation.

In some embodiments, the working current value is positively correlated with the distance measuring deviation.

For example, the working current value I=*a*x+*b*, where *a* and b are parameters. For example, these parameters are 10, respectively.

In step 804, the working current of the distance measuring sensor is adjusted based on the working current value.

Due to the correlation between the distance measuring deviation of the distance measuring sensor and the working current of the distance measuring sensor, adjusting the working current of the distance measuring sensor can effectively improve the measuring accuracy of the distance measuring sensor.

FIG. 9 is a schematic structure diagram of a focusing control apparatus according to an embodiment of the present disclosure. As shown in FIG. 9, the focusing control apparatus comprises a memory 91 and a processor 92.

The memory 91 is used for storing computer instructions. The processor 92 is coupled to the memory 91. The processor 92 is configured to, based on instructions stored in the memory, carry out the method involved in any one of the embodiments of FIGS. 1, 2, 6 to 8.

As shown in FIG. 9, the focusing control apparatus further comprises a communication interface 93 for performing information interaction with other devices. In addition, the focusing control apparatus further comprises a bus 94. The processor 92, the communication interface 93, and the memory 91 perform communication with each other through the bus 94.

The memory 91 may include high-speed RAM (Random Access Memory) or NVM (Non-Volatile Memory). For example, it may be at least one disk storage. The memory 91 may also be a memory array. The memory 91 may also be partitioned into blocks, which may be combined into virtual volumes according to a certain rule.

In addition, the processor 92 may be a central processing unit (CPU), or may be an Application Specific Integrated Circuit (ASIC) or one or more integrated circuits configured to implement the embodiments of the present disclosure.

The present application further provides a non-transitory computer readable medium stored thereon computer instructions that, when executed by a processor, implement the method involved in any one of the embodiments of FIGS. 1, 2, 6 to 8.

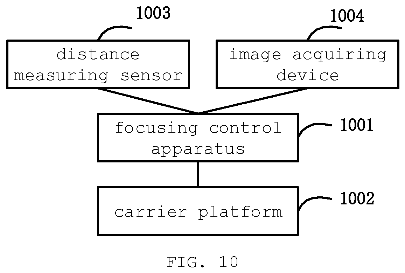

FIG. 10 is a schematic structure diagram of a focusing control system according to an embodiment of the present disclosure. As shown in FIG. 10, the focusing control system comprises a focusing control apparatus 1001, a carrier platform 1002, a distance measuring sensor 1003, and an image acquiring device 1004. The focusing control apparatus 1001 is the focusing control apparatus according to any one of the embodiments shown in FIG. 9.

The carrier platform 1002 is configured to move in a preset direction at a preset speed, wherein the carrier platform 1002 is used to carry a display panel.

The distance measuring sensor 1003 is configured to measure a distance between the distance measuring sensor 1003 and a detection point.

The image acquiring device 1004 is configured to acquire an image of the surface of the display panel, wherein there is a preset distance between the distance measuring sensor 1003 and the image acquiring device 1004 in a preset direction.

Heretofore, various embodiments of the present disclosure have been described in detail. In order to avoid obscuring the concepts of the present disclosure, some details known in the art are not described. Based on the above description, those skilled in the art can understand how to implement the technical solutions disclosed herein.

Although some specific embodiments of the present disclosure have been described in detail by way of example, those skilled in the art should understand that the above examples are only for the purpose of illustration and are not intended to limit the scope of the present disclosure. It should be understood by those skilled in the art that the above embodiments may be modified or equivalently substituted for part of the technical features without departing from the scope and spirit of the present disclosure. The scope of the disclosure is defined by the following claims.

## Claims

1. A focusing control method, comprising:
controlling a carrier platform carrying a display panel to move in a preset direction at a preset speed;
controlling a distance measuring sensor to measure a first distance between the distance measuring sensor and a detection point, wherein the detection point is a point on a surface of the display panel located at a preset distance measuring position;
adjusting a distance between an image acquiring device and the detection point based on the first distance in a case where the detection point reaches a preset image acquiring position in a field of view of the image acquiring device, such that the distance between the image acquiring device and the detection point is a focusing distance of the image acquiring device; and
controlling the image acquiring device to acquire an image of the surface of the display panel.

2. The focusing control method according to claim 1, wherein the adjusting the distance between the image acquiring device and the detection point based on the first distance comprises:
controlling the image acquiring device to perform image acquisition at a preset frequency in a case where the detection point is located at the preset distance measuring position;
controlling the image acquiring device to stop performing image acquisition and count a total number of acquired images in a case where the detection point reaches the preset image acquiring position; and
adjusting the distance between the image acquiring device and the detection point based on the first distance in a case where the total number of the acquired images is different from a preset threshold.

3. The focusing control method according to claim 2, wherein the adjusting the distance between the image acquiring device and the detection point based on the first distance in a case where the total number of the acquired images is different from the preset threshold comprises:
reducing the distance between the image acquiring device and the detection point based on the first distance in a case where the total number of the acquired images is greater than the preset threshold.

4. The focusing control method according to claim 2, wherein the adjusting the distance between the image acquiring device and the detection point based on the first distance in a case where the total number of the acquired images is different from the preset threshold comprises:
increasing the distance between the image acquiring device and the detection point based on the first distance in a case where the total number of the acquired images is less than the preset threshold.

5. The focusing control method according to claim 2, wherein the adjusting the distance between the image acquiring device and the detection point based on the first distance comprises:
adjusting the distance between the image acquisition device and the detection point to the focusing distance in a case where the total number of the acquired images is equal to the preset threshold.

6. The focusing control method according to claim 1, wherein the adjusting the distance between the image acquiring device and the detection point based on the first distance comprises:
controlling the carrier platform to stop moving in a case where the detection point reaches the preset image acquiring position;
adjusting the distance between the image acquiring device and the detection point multiple times based on the first distance, to control the image acquiring device to acquire images of the surface of the display panel at multiple different positions;
selecting an image with a highest definition from the images; and
adjusting the distance between the image acquiring device and the detection point, such that the image acquiring device is located at a location where the image with the highest definition is acquired.

7. The focusing control method according to claim 6, wherein the adjusting the distance between the image acquiring device and the detection point based on the first distance comprises:
controlling the image acquiring device to perform image acquisition at a preset frequency in a case where the detection point is located at the preset distance measuring position; and
controlling the image acquiring device to stop performing image acquisition and count a total number of acquired images in a case where the detection point reaches the preset image acquiring position,
wherein an adjusted distance between the image acquiring device and the detection point is less than the first distance in a case where the total number of the acquired images is greater than the preset threshold.

8. The focusing control method according to claim 7, wherein
the adjusted distance between the image acquiring device and the detection point is greater than the first distance in a case where the total number of the acquired images is less than the preset threshold.

9. The focusing control method according to claim 6, wherein the selecting the image with the highest definition from the images comprises:
calculating a sharpness of each image of the images; and
taking an image with a highest sharpness level as the image with the highest definition.

10. The focusing control method according to any one of claims 1 to 9, further comprising:
controlling the distance measuring sensor to measure a second distance between the distance measuring sensor and a preset detection point;
determining a distance measuring deviation of the distance measuring sensor based on the second distance and a preset distance;
determining a working current value based on the distance measuring deviation; and
adjusting a working current of the distance measuring sensor based on the working current value.

11. The focusing control method according to claim 10, wherein
the working current value is positively correlated with the distance measuring deviation.

12. A focusing control apparatus, comprising:
a processor; and
a memory coupled to the processor, storing program instructions which, when executed by the processor, cause the processor to perform the method according to any one of claims 1 to 11.

13. A focusing control system, comprising:
a focusing control apparatus according to claim 12;
a carrier platform configured to move in a preset direction at a preset speed, wherein the carrier platform is used to carry a display panel;
a distance measuring sensor configured to measure a distance between the distance measuring sensor and a detection point; and
an image acquiring device configured to acquire an image of the surface of the display panel, wherein there is a preset distance between the distance measuring sensor and the image acquiring device in a preset direction.

14. A non-transitory computer readable storage medium stored thereon computer instructions that, when executed by a processor, implement the method according to any one of claims 1 to 11.
